# EUROPEAN PATENT SPECIFICATION

(11) **EP 4 361 861 B1**
(45) Date of publication and mention of the grant of the patent: **29.04.2026**
(21) Application number: 22306626.7
(22) Date of filing: 26.10.2022
(51) Int. Cl.: G06F 21/55, G06F 21/62

(54) **METHOD AND DEVICE FOR ENHANCING ELECTRONIC CONTENT SECURITY**
VERFAHREN UND VORRICHTUNG ZUR VERBESSERUNG DER SICHERHEIT ELEKTRONISCHER INHALTE
PROCÉDÉ ET DISPOSITIF POUR AMÉLIORER LA SÉCURITÉ D'UN CONTENU ÉLECTRONIQUE

(43) Date of publication of application: 01.05.2024
(73) Proprietor: Expleo France, 78180 Montigny-le-Bretonneux (FR)
(72) Inventor: KENNEDY, Brian, Dublin (IE); O'CONNELL, John, Dublin (IE); KOUSTOV, Nikolai, Dublin (IE); KRAWCZYK-KOCA, Joanna, Dublin (IE); LYONS, John, Dublin (IE); KHAN, Ibtasaam, Belfast (NL)
(74) Representative: Santarelli

(56) References cited:
- EP-A1- 2 881 882
- US-A1- 2017 180 400

## Description

### FIELD OF THE INVENTION

The present disclosure concerns a method for enhancing electronic content security. It concerns more particularly a method to detect malicious contents in short message services.

The present disclosure has a direct application in the fight against phishing fraud.

### BACKGROUND OF INVENTION

The approaches described in this section could be pursued but are not necessarily approaches that have been previously conceived or pursued. Therefore, unless otherwise indicated herein, the approaches described in this section are not prior art to the claims in this application and are not admitted prior art by inclusion in this section. Furthermore, all embodiments are not necessarily intended to solve all or even any of the problems brought forward in this section.

Fraud involving Information and communications technology (ICT) are commonplace these days.

There are already several technologies blocking network traffic. While they are well developed, they work at the network level by analysing and filtering the IP flows based on some criteria.

For example, and in the case of an enterprise network, a firewall is blocking network flows entering or outgoing the enterprise network.

Another example of security solution on client devices, are security technologies like anti-virus and anti-spam checking the electronic content a user is receiving or trying to execute on the computing system. Anti-virus solutions aims at filtering the entering flows to detect the signature of known viruses in the flow. Anti-spam are dedicated to the filtering of unwanted emails. Also, these solutions may send the content to quarantine or spam dedicated spaces. In this last case, and even the content is malicious, the user can open malicious messages and may be exposed to the risk of phishing.

While those technology play important roles protecting users against digital threats, often they are not able to block social engineering attacks. A social engineering attack involves human interaction to manipulate users into making security mistakes.

One of the most common frauds is phishing. This technique consists of the fraudster recovering payment or authentication information by pretending to be a recognized organization (banks, telephone operator, etc.) in which the victim has confidence. Phishing attacks using emails are well known since years. However, phishing attacks using Short Message Service (SMS), also called *smishing,* are less known, even if the number of attacks using this means of communication has increased dramatically in recent years, aggravated by the fact that the SMS protocol is not secured.

In the case of smishing, the attacker sends contextual text messages that imitate legitimate messages. These messages typically comprise links to fake websites imitating legitimate bank or famous services recently created to trick the user. The fake websites, a technique known as website spoofing, look like legitimate services misleading the users to provide personal and financial information. Those attacks are very dynamic and rarely blocked by anti-virus, anti-spam or network traffic filters.

These attacks have cost to the society. As an example, in the United Kingdom alone in 2016, the cost associated with smishing related fraud was calculated at STG£ 4.5 million.

Email service providers developed tools to warn victims that emails received are potentially phishing attempts. However, these solutions are not easily adaptable to the case of SMS.

The number of mobile users is increasing, the number of smishing attack will also increase in the coming years: worldwide, approximately 270,000 SMS are sent every second.

Techniques used by fraudsters, which at the beginning were rather basic and could be easily recognized in some cases, are increasingly developed and difficult to detect by users. In addition, those users often do not have any training on cybersecurity and so are easily misled.

When users report losses, the attacks are then identified by digital services providers like financial institutions. The digital services providers often report the spoofed websites to public authorities and domain providers. However, it may take months until the fake website is shutdown.

As potential victims are increasingly exposed to this type of fraud attempts, it is necessary to equip them with robust tools that will evolve with the techniques and take into account these new threats and quickly adapt to these new threats.

Document EP2881882A1 discloses blocking user interaction with interface elements by covering them with graphical elements. Document US2017/0180400A1 discloses a security application using accessibility APIs to intercept data and events in user applications and apply access-control policies.

### SUMMARY OF THE INVENTION

The present invention has been devised to address one or more of the foregoing concerns.

According to an aspect of the invention it is proposed a method of enhancing the security of a third-party electronic content received on a client device by a third-party application via a network, the method being implemented in the client device by a client application, and characterised in that the method comprises :
- extracting the third-party electronic content;
- determining whether the received third-party electronic content contains at least one element to be blocked;
- if the third-party electronic content contains at least one element to be blocked overlaying the third-party electronic content on a user interface of the client device; and
- blocking interaction with the third-party electronic content on the user interface of the client device.

In an embodiment, extracting the third-party electronic content comprises:
- obtaining from the user interface the third-party electronic content when it is displayed on the client device.

In an embodiment, the third-party electronic content is obtained from an accessibility service of an operating system of the client device.

In an embodiment, extracting the third-party electronic content comprises:
- intercepting an event broadcasted by the operating system upon message arrival; and
- obtaining the third-party electronic content corresponding to the intercepted event.

In an embodiment, determining whether the received third-party electronic content contains at least one element to be blocked comprises:
- obtaining elements to be blocked from a block list cache stored in the client device; and
- comparing the third-party electronic content to the elements to be blocked obtained from the block list cache.

In an embodiment, the block list cache is updated periodically from an application backend.

In an embodiment, overlaying the third-party electronic content comprises:
- obtaining the position and size of the third-party electronic content from the accessibility service;
- generating overlay user interface elements based on the position and size of the third-party electronic content; and
- displaying the overlay user interface elements on the user interface.

According to another aspect of the invention it is proposed a computer program product for a programmable apparatus, the computer program product comprising a sequence of instructions for implementing a method according to the invention, when loaded into and executed by the programmable apparatus.

According to another aspect of the invention it is proposed a computer-readable storage medium storing instructions of a computer program for implementing a method according to the invention.

According to another aspect of the invention it is proposed a device for enhancing the security of a third-party electronic content received on a client device by a third-party application via a network, the method being implemented in the client device by a client application, and characterised in that the device comprises a processor configured for :
- extracting the third-party electronic content;
- determining whether the received third-party electronic content contains at least one element to be blocked;
- if the third-party electronic content contains at least one element to be blocked overlaying the third-party electronic content on a user interface of the client device; and
- blocking interaction with the third-party electronic content on the user interface of the client device.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** illustrates a block diagram of an example of an overall system architecture analysing and detecting on the user interface potentially malicious content.
**Figure 2** illustrates a flowchart of an example of a method to detect potentially malicious content received, to overlay it on a user interface, according to a first embodiment.
**Figure 3** illustrates examples of screen captures of a user interface following several automatic and manual actions.
**Figure 4** illustrates a block diagram describing the components of an Android^{®} implementation the method, according to a particular embodiment.
**Figure 5** illustrates a flowchart representing the interaction of the components on an Android^{®} operating systems, according to a particular embodiment.
**Figure 6** illustrates a flowchart of an example of a method for managing an application backend, according to an embodiment of the invention.
**Figure 7** illustrates a block diagram of a computer system implementing a client application, according to an embodiment of the invention.

### DETAILED DESCRIPTION OF THE INVENTION

Our solution is an innovative Anti-Smishing solution aimed at addressing the growing problem of SMS or txt-based fraud on end users Android Mobile Phones. While existing technology plays an important role protecting users against digital threats, often they are not able to block social engineering attacks. A social engineering attack involves human interaction to manipulate users into making security mistakes. One example is Smishing, when the attacker sends contextual text messages, using SMS (Short Message Service), with links to fake websites recently created to trick the user. The fake websites, a technique known as website spoofing, look like legitimate services misleading the users to provide personal and financial information. Those attacks are very dynamic and rarely blocked by existing anti-virus, anti-spam or network traffic filters.

The present technology relates to providing methods and systems to register malicious text(s), text pattern(s), phone number(s) or link(s) to a cloud-based knowledge base. Then, on the client device's user interface, detecting this content linking to websites, phone numbers, keywords, software programs or any service classified as malicious.

The technology our solution provides to the user on the USER INTERFACE of the client device an indication (warning message) of the malicious content. The technology overlays USER INTERFACE elements to prevent the user clicking on the SMS message to access the fraudulent content.

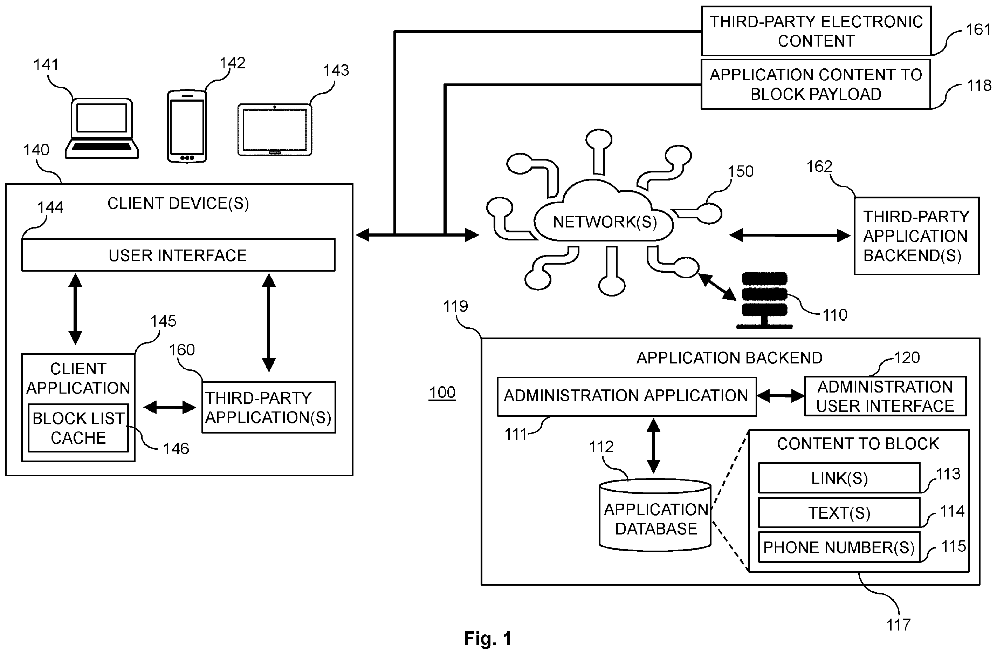

**Figure 1** is a block diagram of an example of an overall system architecture **100** according to a particular mode of the invention.

The overall system architecture **100** mainly comprises a client device **140.** The client device **140** is typically a computer **141,** a smartphone **142** or a tablet **143,** connected to a network **150.** The network **150** is connected to a computer server **110.** The client device **140** must be able to receive messages from the network **150.** In the exemplary embodiment, the messages are Short Message Services (SMS).

The solution comprises a client application **145** running on the client device **140.** The client application **145** cooperates with the computer server **110** running an application backend **119.** This application backend **119** aims at providing an administration service **111** to operate the solution. In embodiments, the application backend **119** is responsible to maintain an application database **112** comprising information on known threats **117,** like known fraudulent Uniform Resource Locator (URL or link) **113,** keywords identifying known malicious messages **114,** phone numbers **115** known to be used for sending malicious content, and the like. The application database **112,** or part of it, is downloaded by the client application **145** which maintains a local database of known threats in the form of a block list cache **146.**

In some embodiments, the client application **145** cooperates with a third-party application **160.** The third-party application **160** is typically an application offering a service susceptible to communicate by messages with the user, as any messenger application like. In this case, the solution may be specifically used by the third-party application **160** to protect the user against malicious messages targeting the third-party application **160.** As an example, the third-party application **160** may be any messenger application as SMS, WhatsApp^{®}, Messenger^{®} and the solution is used to protect the user against malicious messages attempting to deceive the user and capture its credentials for accessing to his bank account or personal information. The third-party application **160** may frequently communicate with a third-party application backend **162** through the network **150,** transmitting for example a third-party electronic content **161** containing images, text, web links or any binary information is transmitted to and from the client device **140,** some of content are eventually presented on the user interface **144.**

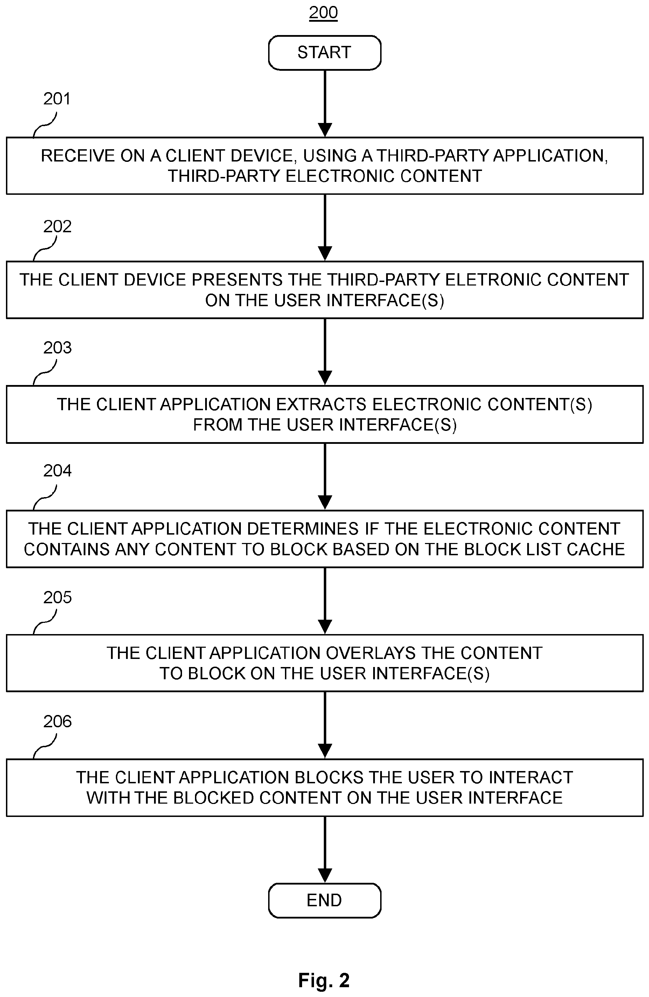

The overall system architecture **100** implements a method, shown in **Figure 2****,** of checking the content of messages received on the client device **140** to see if the content is malicious or not.

**Figure 2** is a flowchart of an example of a method **200** to detect potentially malicious content, like for example links **113,** text **114,** and phone numbers **115** known to be used for sending malicious content, on the user interface **144.** In one embodiment of the method **200,** a purpose is to highlight suspicious messages, as well as their malicious content, in the user interface **144** so that the user is alerted of the potential danger. Method **200** comprises the following main six steps. One of the problems to be solved is to intercept the messages for detection before the user may interact with the message, typically before the user may use a potential malicious link in the message. In this embodiment, the accessibility services of the operating system is used for intercepting the content of the received messages as explained below.

Step **201** comprises receiving a message, in this example an SMS, on a client device **140,** from a third-party application **160,** containing a third-party electronic content **161.** The third-party application **160** is typically a message application, for example the SMS message application of a smartphone. The third-party electronic content **161** is transmitted via the network **150** and is then received by the client device **140** on which the client application **145,** used for securing the user of potentially phishing attempts, is running. At this step, the third-party electronic content **161** has just been received by the client device and has not been yet displayed on the user interface **144,** action that is executed in the next step.

Step **202** comprises presenting the third-party electronic content **161** on the user interface **144.** At this step of the method **200,** the third-party electronic content **161** has not yet been analysed by the client application **145.** Once the third-party electronic content **161** is displayed on the user interface **144,** the third-party electronic content **161** can be retrieved by the *Accessibility Services* that are installed in the client device 140.

During step **203,** the client application **144** extracts the content from the third-party electronic content **161** received, from the user interface **144.** Step **203** is typically realized using the *Accessibility Services* presents on the client device **140.** Those *Accessibility Services* are normally used, for example, for applications which helps persons who have visual impairments, and transcribe the content of received messages into audio signals. *Accessibility Services* are available in main operating systems (OS) such as Windows^{®}, MAC OS^{®}, Unix^{®} used for computers **141,** and as Android^{®} and iOS^{®} used for smartphones **142** and tablets **143.**

Once from the third-party electronic content **161** is extracted by the Accessibility Services, the third-party electronic content **161** present in the message is transmitted to the client application **145** for analysing it.

Step **204** comprises, after the client application **145** has retrieved third-party electronic content **161,** determining if the third-party electronic content **161** received contains any content to block based on the block list cache **146.** During this step, the client application **145** is searching if, in the third-party electronic content **161,** there is malicious elements already known in the application database **112** and listed in the block list cache **146** of the client application **145.** Thus, in some embodiments, the client application **145** is comparing if the emitter, for example the phone number, used for sending the message is a phone number **115** listed in the content to block **117** of the application backend **119.** Also, in some embodiments, the analysis performed by the client application **145** focuses on key words and phrases frequently used in phishing attempts, such as login, account, security, password, account blocked, transaction, urgent, click here, call this number, code, etc.

In some embodiments too, the link(s) contained in the message are compared with links **113** to web pages listed and known to be malicious, registered in the block list cache **146.** To summarise, and in some embodiments, if a content, such as text, link, phone number, extracted from the third-party electronic content **161** is listed in the content to block **114,** interactions with the third-party electronic content **161** are blocked.

In alternative embodiments, the analysis performed by the client application 145 can be realized through of an artificial neural network running on the client device capable of identifying a message as potentially malicious.

Then, and if malicious content is identified in the third-party electronic content **161** received, step **205** comprises modifying the visual aspect of the message received by, in some embodiments, overlaying the content to block on the user interface **144.**

Finally, step **206** comprises blocking possible interactions on the user interface **144.** In this way, and for example, the user is warned of the potential phishing attempt he has just received and is prevented from interacting with the content of the message, in particular he cannot follow the fraudulent link.

In some embodiments, a pop-up window is displayed by the user interface **144** for warning the user of the potential phishing attempt.

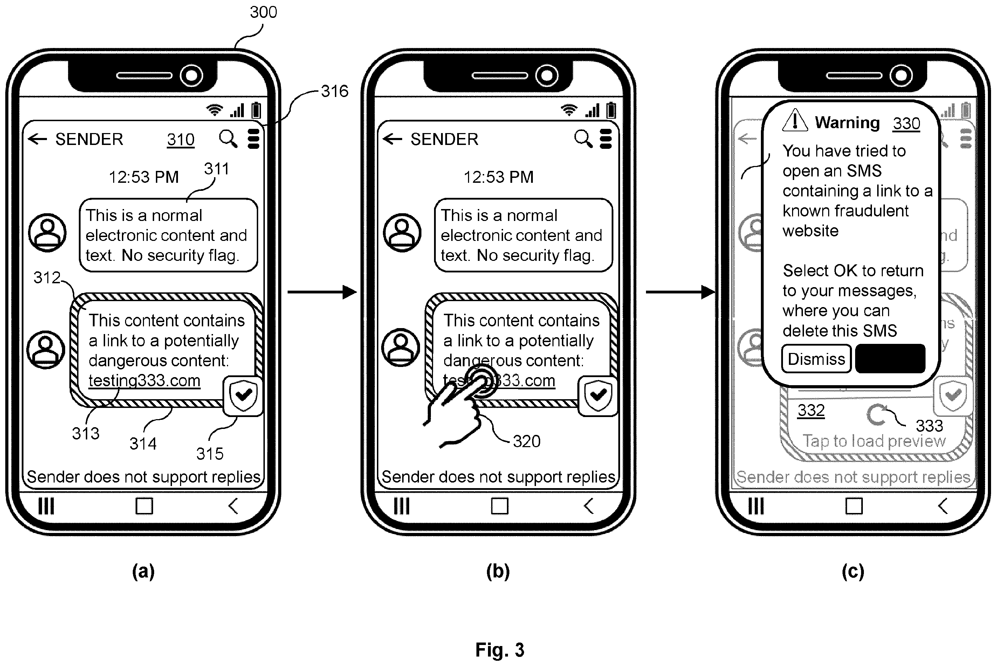

Steps **201, 205** and **206,** for which interactions with the user interface **144** are performed, are illustrated in Figure 3.

**Figure 3** is an illustration of an example of client device **300** running the client application **145** implementing the present technology, represented by three screen captures **a, b and c.** The client device **300** has a third-party application **310** in a foreground of the user interface **316.**

On the screen capture **a,** the third-party application **310** is presenting on the user interface **316** a first electronic content **311** which is not analysed as containing non-malicious content. Then, the third-party application **310** is presenting on the user interface **316** a second electronic content **312** which contains a link **313** to a malicious website listed in the block list cache **146** of the client application **145.** Accordingly, the second electronic content is analysed as malicious and treated as such by the client application **145.**

In each case, the client application **145** extracts the content of the message from the user interface **316,** using the *Accessibility Services* of the OS installed on the client device **300.** Then, and as described previously, the electronic content is analysed by the client application **146,** by comparing it against the knowledge base implemented in the block list cache **146.** When the client application **145** detects the malicious content, as it is the case with the second electronic content **312,** the client application overlays (for example in red, amber, etc.) the message with a user interface element **314** to indicate its malicious status. This overlay is represented in the user interface element **314** with a hatched frame in this example. Also, in some embodiments, a suitable logo **315** may be used to emphasize the warning.

On the screen capture **b,** the user, even with user interface element **314** and the suitable logo **315,** tries to access the malicious link **313** by selecting it **320,** the client application **145** blocks the action and may overlay a warning popup window **330,** as shown on the screen capture **c.** The actions of the user are detected by the client application **145** by using a feature of the accessibility service that provides user interface events. This way, the client application **145** may intercept the user interaction attempt. Additional information may be displayed in the warning pop-up window **330** to warn the user of the potential phishing attempt that is taking place.

Screen capture c represents a step where the warning popup window **330** is displayed on the user interface **316** of the third-party application **310.**

Since potentially malicious links **113,** texts **114,** services, and numbers **115** are frequently created and dynamic in nature, the invention may require the registering of the threat signatures in order to keep the knowledge base up-to-date.

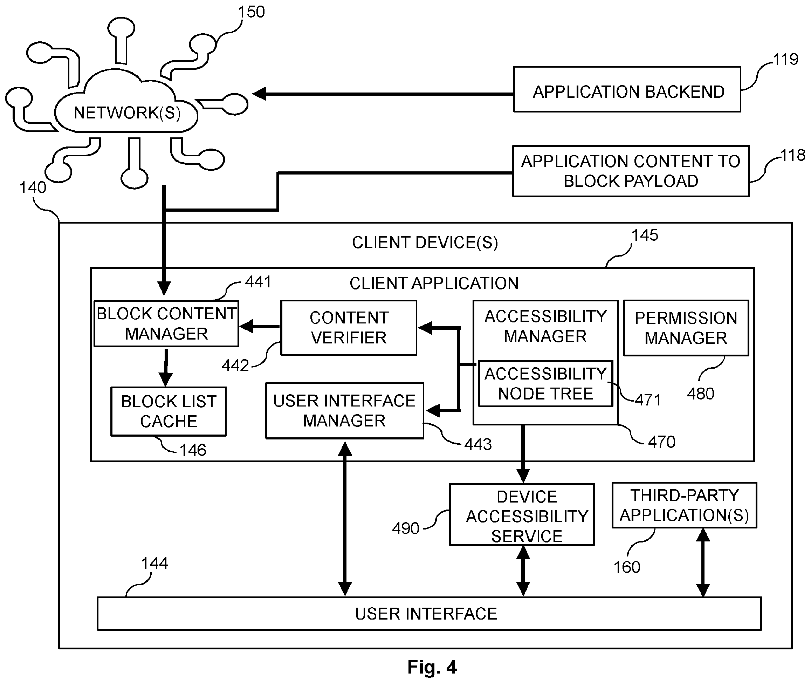

**Figure 4** is a block diagram describing the components of an Android^{®} OS implementation of the method **200** in an embodiment of the invention.

In this embodiment, an accessibility service **490** available on the Android^{®} OS is used. The accessibility service is normally used in order to assist users with disabilities in using Android^{®} devices and apps. Thus, and in order to support people with visual impairments, the accessibility service **490** provides means, typically APIs, to be used for creating accessible applications including screen readers. Other kind of support can also be performed.

In the context of the present invention, the accessibility service **490** can analyze any third-party electronic content **161,** presented on the user interface **144** by any third-party application **160.** Once the third-party electronic content **161** content extracted by the accessibility service **490,** the third-party electronic content **161** is presented as a tree of accessibility node information, which may or may not map one-to-one to the view hierarchy. Then, the client application **145** iterates over an accessibility nodes tree **471,** contained in an accessibility manager **470** program, in order to extract information from the third-party electronic content **161,** such as text, links and the location of the node on the user interface **144.** Thus, if a potentially malicious text or link is detected, along with the location of the node, the client application **145** is able to overlay the node with a new user interface element to highlight it and prevent the user from acting on the node. In other words, the accessibility service provides a hierarchical data structure, the accessibility node tree **471,** representing the content of the screen. This hierarchical data structure may be analyzed by the client application **145.** From this hierarchical data structure, the position of elements, like the message, on the screen are provided. These positions may be used to build overlay elements to be displayed on the user interface **144.**

In some embodiments, the client application **145** mainly includes a permission manager **480** in order to verifying the required permission to read user interface nodes. These permissions are typically requested when registering the client application **145** in an application store, and given by the application store manager. The client application **145** further includes the accessibility manager **470,** including the accessibility node tree **471,** used, among other things, for extracting messages node information, a content verifier **442,** which calls a block content manager **441,** for checking message content, and an user interface manager **443,** used for configurating and creating user interface elements to display on malicious content.

In order to clarify the interactions of the components of the client application **145,** the following figure presents the actions of each one during the different steps implemented by the method **200.**

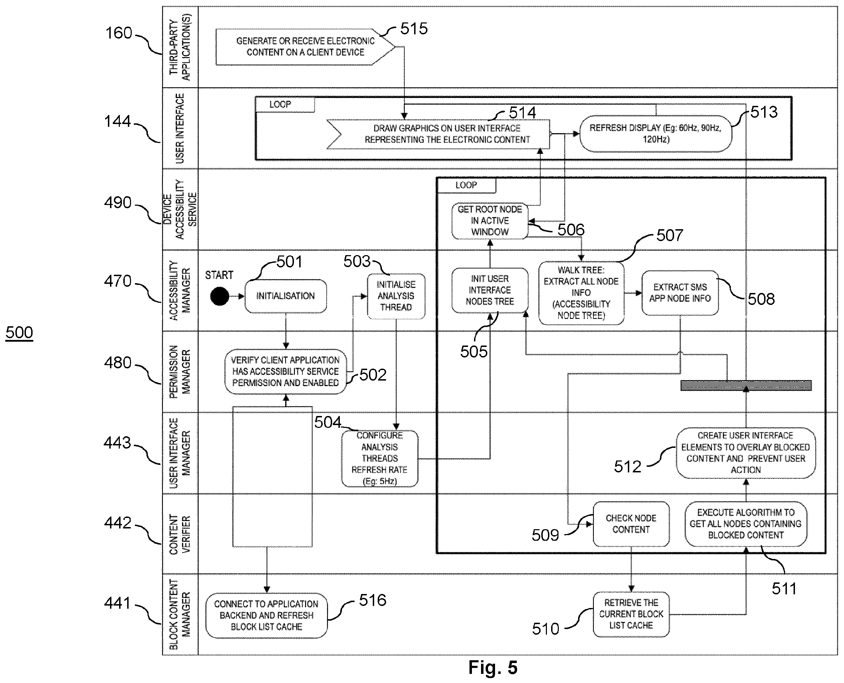

**Figure 5** is a flowchart representing interactions **500** of the different components on an Android^{®} operating systems during steps of the method **200.**

Third-party application **160** represents the messaging application monitored by the solution in this embodiment. User interface **144** represents the user interface module of the operating system of the client device **140.** Device accessibility service **490** represents the accessibility service provided by the operating system of the client device **140.** Accessibility manager **470** represents a module of the client application **145** in charge of interacting with the device accessibility service **490** of the operating system. Permission manager **480** represents a module of the client application **145** in charge of interacting with the permission service of the operating system. User interface manager **443** represents a module of the client application **145** in charge of interacting with the user interface service of the operating system. Content verifier **442** represents a module of the client application **145** in charge of verifying the electronic content. Block content manager **441** represents a module of the client application **145** in charge of managing the block list cache **146** which contains the content to block .

First of all, an initialisation step **501** takes places in the accessibility manager **470,** and comprises getting all the required memory for performing the client application **145.** During this step, instances, as a WindowManager from the Android^{®} OS, are created. The WindowManager instance is an interface which can be used by the client application **145** in order to interact with the client device **140.** At the initialisation step **501,** the client application **145** initializes an empty, translucent, not focusable, *type_accessibility_overlay* view and add it to the user interface **144.**

Then, the client application **145,** in order to start the execution of the filtering activities, uses the permission manager **480** to verify whether it is enabled on Android^{®} OS as an accessibility service and has the required permission to read user interface nodes.

Meanwhile, during an updated step **516,** the client application **145** connects to the application backend **119,** through the network **150,** to download the application content to block payload **118,** using the block content manager **441.** As previously described, application content to block payload **118** contains the content to block **117** which is a list of texts **114,** links **113** and phone numbers **115** the client application **145** should filter and block. Then, the client application **145** stores the content to block **117** in the block list cache **146.** The block list cache **146** is a local data storage the block content manager **441** maintains on the client device **140.** The block content manager **441** also schedules a frequency the block list cache **146** is refreshed with content from the application backend, which can be for example in some embodiments, performed every 30 minutes in the updated step **516.**

Once the initialization step **501** is done, and the block list cache **146** is updated, the client application **140** starts to initialize the analysis thread, during step **503.** During the initialization analysis thread step **503,** the accessibility manager **470,** as an extension of the Android^{®} Accessibility Services **490,** receives accessibility events from the Android^{®} OS. Then accessibility events are sent by the Android^{®} OS when something notable happens in the user interface **144,** for example, like when a button is clicked or a view is focused. While any third-party application **160** generating accessibility events can be monitored and protected by the invention, the accessibility manager **470** implemented a feature to monitor only a pre-defined set of third-party application **160.** It is more useful for the technology to monitor and filter content on email and SMS applications than, for example, a bank app. For example, bank apps communicate with their backend using safe channels and is very unlikely to send malicious text, links or numbers to the client device **140.** On the other side, SMS and email apps are known destinations for smishing and phishing respectively.

For protecting the SMS application on the Android^{®} OS, the accessibility manager **470** calls the Android^{®} OS to obtain the default SMS Application package identification, using the *Telephony.Sms.getDefaultSmsPackage* package. Indeed, a package identification is unique for all third-party application **160** installed on an Android^{®} device.

So, when the accessibility manager **470** receives an accessibility event in which the *packageName* is the same as one of monitored applications (example: the SMS package), it starts an analysis thread specific to filter and block content on the third-party application **160** currently active on the user interface **144.**

Since, the active on the screen is likely to generate several accessibility events, the accessibility manager **470** only starts the analysis thread for the specific third-party application **160** if there is no other thread for analysis application already running. Also, users are frequently switching between third-party applications **160** and interacting with those application on the user interface **144.** thus, the third-party applications **160** frequently send electronic content **161,** in a step **515,** to the device user interface **144** which will draw graphics representing the content during a step **514.** The client device **140** display draws the current status of the user interface **144** regularly, for example in some embodiments at 60Hz, during a step **513.**

Before analyzing messages, an analysis threads refresh rate configuration step **504** is performed by the user interface manager **443.** Step **504,** defines in the client application **145** the frequency at which the analysis should run. Indeed, the frequency of analysis is a key parameter of the client application **145** because it should take into account several issues. For example, a frequency of analysis higher than the client device **140** display refresh rate is not useful, since the client device display won't be able to plot part of the results. On one hand, a high frequency analysis also impacts on battery consumption, since more the Central Processing unit (CPU) will be required to keep the analysis running. On the other hand, a low frequency of analysis won't be able to capture the user interface **144** elements before a user potentially interacts with the malicious content.

The frequency of analysis is therefore a compromise between the performance of the client device **140,** and the ability to intercept malicious messages to prevent a user from interacting with them.

In some embodiments, and for the Android^{®} OS and displays, the user interface manager **443** sets the analysis thread refresh rate to 5 Hz. The analysis thread refresh rate of 5 Hz was obtained after usability studies, this rate being a good balance in battery consumption and enough to prevent the user to interact with a potentially malicious content.

Then an initialization user interface node step **505** is performed. This step consists in initializing an empty tree to analyze the current user interface elements. As configured previously, when the user interface node is created, the analysis thread runs in a loop with the defined analysis frequency (for example 5 Hz).

When a third-party electric content **161,** from the pre-defined set of third-party application **160,** is displayed on the user interface **144,** the accessibility manager **470** calls the Android^{®} accessibility service **490,** during a step **506,** to obtain a reference to the root accessibility node currently active on the user interface **144.**

A browsing step **507,** performed by the accessibility manager **470** and from the root node, then consists by browsing on all nodes available on the current status of the user interface **144.** This browsing step **507** is followed by an extraction step **508** in which the accessibility manager **470** identifies the node content and extracts information which is, in one particular embodiment the third-party electronic content **161** from an SMS application, are the text content of a message, date and time, sender and the position on the screen.

Once the extraction step **508** has been completed, the next step **509** comprises sending, by the accessibility manager **470,** the content extracted from the user interface **144** to the content verifier **442** for checking it. Then, during a step **510,** the content verifier **442** calls the block content manager **441** to retrieve the block list cache **146.**

During an analyzing step **511,** the content verifier **442** checks text, numbers and any link in the third-party electronic content **161** against the block list cache **146.**

One of the advantages of the present invention is that the client application **145** executes the filtering only on the client device **140** and not on any external backend service. This is a significant security advantage, since no user data is transmitted, using any kind of network **150,** from the client device **140** to any external service. This keeps the user privacy unchanged by the client application **145.**

In some embodiments, the content verifier **442** can check if the content on the node matches text, number, or links in the block list, using a case-insensitive search.

In some embodiments, the content verifier **442** can check if the content on the node matches a regular expression *(regex).*

Finally, all accessibility service nodes containing any content to block are filtered and sent to the user interface manager **443.**

During a step **512,** the user interface manager **443** creates Android^{®} user interface elements for all accessibility nodes containing any content to block. For example, the Android^{®} user interface elements can be *Graphics.Rect* objects in order to overlay the potential malicious content.

Thus, and by means of the location coordinates of the original accessibility node, the user interface manager can generate the Android^{®} user interface elements with the correct position and size to overlay the potentially malicious content, as shown in Figure 3.

Also, action listeners can be added by the user interface manager **443.** For example, when a user tries to act (e.g. click) on the malicious content, the overlay interface element will trigger the listener. The overlay interface element acts as a shield protecting the third-party application intercepting the events generated when the user tries to interact with the message to prevent these interactions.

The listener is a function, that, when called, will generate an Android^{®} user interface element (e.g. a warning pop-up as shown in Figure 3) alerting the user is trying to access a potentially malicious content.

All generated Android^{®} user interface elements are then added to the client application **145,** which is initially empty, translucent, not focusable, as *type_accessibility_overlay* view.

Lastly, after a refresh displayed step **513,** which occurs at a frequency of, for examples 60 Hz, 90Hz or 120 Hz, a representative step **514,** of the electronic content on the user interface **144** adding the protection element created by the client application **145** is done. The analysis thread runs indefinitely, on the define frequency, while the analyzed third-party application **160** is active on the user interface **144.**

In some embodiments, where the third-party application 160 to supervise is an SMS application installed in the client device **140,** the step **507** and **508** are performed based on a broadcast message *android.provider.Telephony.SMS_RECEIVED,* trigged by the Android^{®} OS when a messaged is received. This embodiment allows the client application **145** to intercept the incoming message, without using the device accessibility service 490. Indeed, the client application **145** has a *BroadcastReceiver* listening to that event on the Android^{®} OS. When the event is triggered, the client application **145** can get access to the SMS content, analyze this content, and display a pop-up window if the message contains malicious content. The accessibility service may then be used as previously described to overlay the message in the third-party application and to prevent the user from interacting with the malicious message.

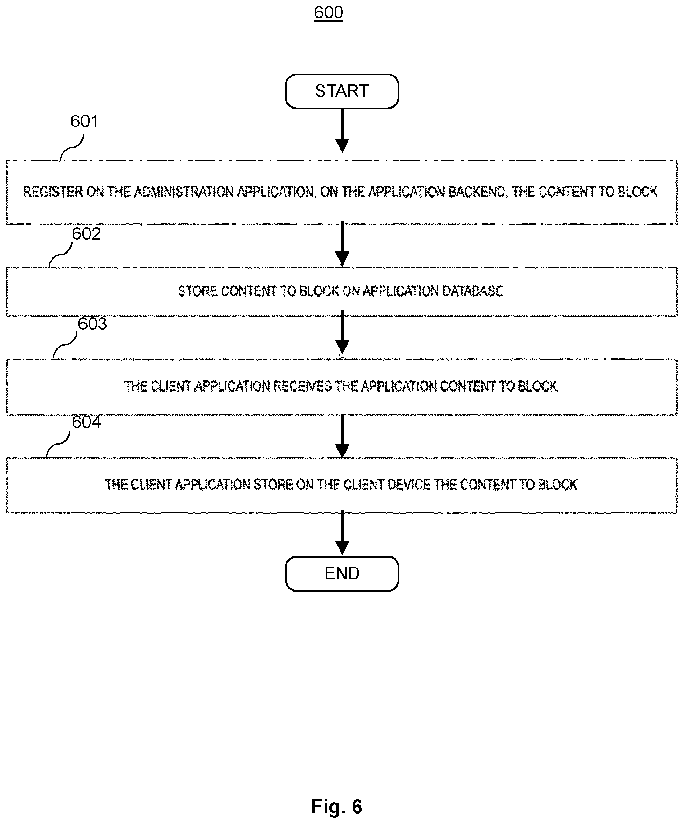

**Figure 6** is a flowchart of an example of a method **600** to register and transfer the knowledge base to the client application **145** of the client device **140,** using the administration service **111** which operate the solution.

In a step **601** of information input, the administrative service **111** of the application backend **119** allows cybersecurity users to register the content to block **117.** During this step, cybersecurity users provide information using an administrative user interface **120** of the administration service **111.** In some embodiments, this step can be done by means of a form or command lines.

In a step **602** of registration, the content to block **117** are persisted into the application database **112.** In some embodiments, the content to block 117, in order to identify potential phishing treats, are any kind of electronic link **113,** text **114** or phone numbers **115,** without this being a limitation, the skilled person can identify and add other elements in the content to block **117** that can be used to classify a message as potentially malicious. Moreover, the structure of the application database **112** is capable of handling the addition and removal of content types to be blocked. At the end of the step **602,** the knowledge base is updated, and the content to block **117** is sent to the application content to block payload **118.**

In a step **603,** the application content to block payload **118** is uploaded on the client device **140** through the network **150,** and during a step **604,** the client application **145** updates the block list cache **146** with the content list received. At the end of step **604,** the client device **140** has the latest updated content to block **117** in order to run the security check on the next messages that will be received.

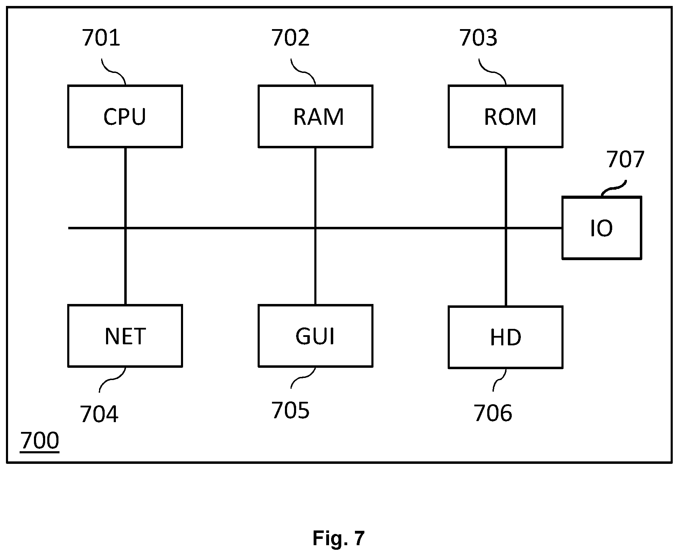

**Figure** 7 is a schematic block diagram of a computing device **700** for implementation of one or more embodiments of the invention. The computing device **700** may be a device such as a micro-computer, a workstation or a light portable device. The computing device **700** comprises a communication bus connected to:
- a central processing unit **701,** such as a microprocessor, denoted CPU;
- a random access memory **702,** denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory **703,** denoted ROM, for storing computer programs for implementing embodiments of the invention;
- a network interface **704** is typically connected to a communication network over which digital data to be processed are transmitted or received. The network interface **704** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **701;**
- a graphical user interface **705** may be used for receiving inputs from a user or to display information to a user;
- a hard disk **706** denoted HD may be provided as a mass storage device;
- an I/O module **707** may be used for receiving/sending data from/to external devices such as a video source or display.

The executable code may be stored either in read only memory **703,** on the hard disk 706 or on a removable digital medium such as for example a disk. According to a variant, the executable code of the programs can be received by means of a communication network, via the network interface **704,** in order to be stored in one of the storage means of the communication device **700,** such as the hard disk **706,** before being executed.

The central processing unit **701** is adapted to control and direct the execution of the instructions or portions of software code of the program or programs according to embodiments of the invention, which instructions are stored in one of the aforementioned storage means. After powering on, the CPU **701** is capable of executing instructions from main RAM memory **702** relating to a software application after those instructions have been loaded from the program ROM **703** or the hard-disc (HD) **706** for example. Such a software application, when executed by the CPU **701,** causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method (200) of enhancing the security of a third-party electronic content (161) received on a client device (140) by a third-party application (160) via a network (150), the method (200) being implemented in the client device (140) by a client application (145), and **characterised in that** the method comprises :
- (203) extracting the third-party electronic content (161), obtained from an accessibility service of an operating system of said device, when it is displayed on an user interface (144) of said device;
- (204) determining locally whether the received third-party electronic content (161) contains at least one element to be blocked, by comparing text, numbers and/or links in the received third-party electronic content (161) against a block list cache (146) stored on the client device;
- (205) if the third-party electronic content (161) contains at least one element to be blocked obtaining, from the accessibility service, the position and size of a corresponding accessibility node and generating overlay user interface elements based on the position and size, overlaying the third-party electronic content (161) on a user interface (144) of the client device (140) by displaying said overlay as an empty, translucent, not focusable view; and
- (206) blocking interaction with the third-party electronic content (161) on the user interface (144) of the client device (140) by intercepting, via the overlay, user interaction events destined to said content and triggering a warning pop-up window.

2. The method of claim 1, wherein the block list cache (146) is updated periodically from an application backend (119).

3. A computer program product for a programmable apparatus, the computer program product comprising a sequence of instructions for implementing a method according to any one of claims 1 to 2, when loaded into and executed by the programmable apparatus.

4. A computer-readable storage medium storing instructions of a computer program for implementing a method according to any one of claims 1 to 2.

5. A device for enhancing the security of a third-party electronic content (161) received on a client device (140) by a third-party application (160) via a network (150), the method (200) being implemented in the client device (140) by a client application (145), and **characterised in that** the device comprises a processor configured for :
- (203) extracting the third-party electronic content (161), obtained from an accessibility service of an operating system of said device, when it is displayed on an user interface (144) of said device;
- (204) determining locally whether the received third-party electronic content (161) contains at least one element to be blocked, by comparing text, numbers and/or links in the received third-party electronic content (161) against a block list cache (146) stored on the client device;
- (205) if the third-party electronic content (161) contains at least one element to be blocked obtaining, from the accessibility service, the position and size of a corresponding accessibility node and generating overlay user interface elements based on the position and size, overlaying the third-party electronic content (161) on a user interface (144) of the client device (140) by displaying said overlay as an empty, translucent, not focusable view; and
- (206) blocking interaction with the third-party electronic content (161) on the user interface (144) of the client device (140) by intercepting, via the overlay, user interaction events destined to said content and triggering a warning pop-up window.

## Patentansprüche

1. Verfahren (200) zur Erhöhung der Sicherheit eines elektronischen Inhalts eines Drittanbieters (161), der auf einer Client-Vorrichtung (140) von einer Anwendung eines Drittanbieters (160) über ein Netzwerk (150) empfangen wird, wobei das Verfahren (200) in der Client-Vorrichtung (140) von einer Client-Anwendung (145) implementiert wird, und **dadurch gekennzeichnet, dass** das Verfahren umfasst:
- (203) Extrahieren des elektronischen Inhalts eines Drittanbieters (161), der aus einem Barrierefreiheitsdienst eines Betriebssystems der Vorrichtung erhalten wird, wenn er auf einer Benutzeroberfläche (144) der Vorrichtung angezeigt wird;
- (204) lokales Bestimmen, ob der empfangene elektronische Inhalt eines Drittanbieters (161) mindestens ein zu blockierendes Element enthält, indem Text, Zahlen und/oder Links in dem empfangenen elektronischen Inhalt eines Drittanbieters (161) mit einem auf der Client-Vorrichtung gespeicherten Blockierrlisten-Cache (146) abgeglichen werden;
- (205) wenn der elektronische Inhalt eines Drittanbieters (161) mindestens ein zu blockierendes Element enthält, das aus dem Barrierefreiheitsdienst die Position und Größe eines entsprechenden Barrierefreiheitsknotens erhält und basierend auf der Position und Größe Overlay-Benutzeroberflächenelemente erzeugt, Überlagern des elektronischen Inhalts eines Drittanbieters (161) auf einer Benutzeroberfläche (144) der Client-Vorrichtung (140), indem das Overlay als leere, durchsichtige, nicht fokussierbare Ansicht angezeigt wird; und
- (206) Blockieren der Interaktion mit dem elektronischen Inhalt eines Drittanbieters (161) auf der Benutzeroberfläche (144) der Client-Vorrichtung (140), indem über das Overlay Benutzerinteraktionsereignisse abgefangen werden, die für den Inhalt bestimmt sind, und ein Warn-Popup-Fenster ausgelöst wird.

2. Verfahren nach Anspruch 1, wobei der Blocklisten-Cache (146) regelmäßig von einem Anwendungs-Backend (119) aktualisiert wird.

3. Computerprogrammprodukt für eine programmierbare Einrichtung, wobei das Computerprogrammprodukt eine Folge von Anweisungen zum Implementieren eines Verfahrens nach einem der Ansprüche 1 bis 2 umfasst, wenn es in die programmierbare Einrichtung geladen und von dieser ausgeführt wird.

4. Computerlesbares Speichermedium, das Anweisungen eines Computerprogramms zum Implementieren eines Verfahrens nach einem der Ansprüche 1 bis 2 speichert.

5. Vorrichtung zur Erhöhung der Sicherheit eines elektronischen Inhalts eines Drittanbieters (161), der auf einer Client-Vorrichtung (140) von einer Anwendung eines Drittanbieters (160) über ein Netzwerk (150) empfangen wird, wobei das Verfahren (200) in der Client-Vorrichtung (140) von einer Client-Anwendung (145) implementiert wird, und **dadurch gekennzeichnet, dass** die Vorrichtung einen Prozessor umfasst, der für Folgendes konfiguriert ist:
- (203) Extrahieren des elektronischen Inhalts eines Drittanbieters (161), der aus einem Barrierefreiheitsdienst eines Betriebssystems der Vorrichtung erhalten wird, wenn er auf einer Benutzeroberfläche (144) der Vorrichtung angezeigt wird;
- (204) lokales Bestimmen, ob der empfangene elektronische Inhalt eines Drittanbieters (161) mindestens ein zu blockierendes Element enthält, indem Text, Zahlen und/oder Links in dem empfangenen elektronischen Inhalt eines Drittanbieters (161) mit einem auf der Client-Vorrichtung gespeicherten Blockierrlisten-Cache (146) abgeglichen werden;
- (205) wenn der elektronische Inhalt eines Drittanbieters (161) mindestens ein zu blockierendes Element enthält, das aus dem Barrierefreiheitsdienst die Position und Größe eines entsprechenden Barrierefreiheitsknotens erhält und basierend auf der Position und Größe Overlay-Benutzeroberflächenelemente erzeugt, Überlagern des elektronischen Inhalts eines Drittanbieters (161) auf einer Benutzeroberfläche (144) der Client-Vorrichtung (140), indem das Overlay als leere, durchsichtige, nicht fokussierbare Ansicht angezeigt wird; und
- (206) Blockieren der Interaktion mit dem elektronischen Inhalt eines Drittanbieters (161) auf der Benutzeroberfläche (144) der Client-Vorrichtung (140), indem über das Overlay Benutzerinteraktionsereignisse abgefangen werden, die für den Inhalt bestimmt sind, und ein Warn-Popup-Fenster ausgelöst wird.

## Revendications

1. Procédé (200) d'amélioration de la sécurité d'un contenu électronique tiers (161) reçu sur un dispositif client (140) par une application tierce (160) via un réseau (150), le procédé (200) étant mis en œuvre dans le dispositif client (140) par une application client (145), et **caractérisé en ce que** le procédé comporte :
- (203) l'extraction du contenu électronique tiers (161), obtenu à partir d'un service d'accessibilité d'un système d'exploitation dudit dispositif, lorsqu'il est affiché sur une interface utilisateur (144) dudit dispositif ;
- (204) le fait de déterminer localement si le contenu électronique tiers (161) reçu contient au moins un élément à bloquer, en comparant un texte, des numéros et/ou des liens dans le contenu électronique tiers (161) reçu par rapport à un cache de liste de blocage (146) stocké sur le dispositif client ;
- (205) si le contenu électronique tiers (161) contient au moins un élément à bloquer, l'obtention, à partir du service d'accessibilité, de la position et de la taille d'un nœud d'accessibilité correspondant et la génération d'éléments d'interface utilisateur superposés sur la base de la position et de la taille, la superposition du contenu électronique tiers (161) sur une interface utilisateur (144) du dispositif client (140) en affichant ladite superposition sous forme d'une vue vide, translucide, non focalisable ; et
- (206) le blocage d'une interaction avec le contenu électronique tiers (161) sur l'interface utilisateur (144) du dispositif client (140) en interceptant, via la superposition, des événements d'interaction utilisateur destinés audit contenu et en déclenchant une fenêtre contextuelle d'avertissement.

2. Procédé selon la revendication 1, dans lequel le cache de liste de blocage (146) est mis à jour périodiquement à partir d'un backend applicatif (119).

3. Produit de programme informatique pour un appareil programmable, le produit de programme informatique comportant une séquence d'instructions pour mettre en œuvre un procédé selon l'une quelconque des revendications 1 à 2, lorsqu'il est chargé dans l'appareil programmable et exécuté par celui-ci.

4. Support de stockage lisible par ordinateur stockant des instructions d'un programme informatique pour mettre en œuvre un procédé selon l'une quelconque des revendications 1 à 2.

5. Dispositif d'amélioration de la sécurité d'un contenu électronique tiers (161) reçu sur un dispositif client (140) par une application tierce (160) via un réseau (150), le procédé (200) étant mis en œuvre dans le dispositif client (140) par une application client (145), et **caractérisé en ce que** le dispositif comporte un processeur configuré pour :
- (203) extraire le contenu électronique tiers (161), obtenu à partir d'un service d'accessibilité d'un système d'exploitation dudit dispositif, lorsqu'il est affiché sur une interface utilisateur (144) dudit dispositif ;
- (204) déterminer localement si le contenu électronique tiers (161) reçu contient au moins un élément à bloquer, en comparant un texte, des numéros et/ou des liens dans le contenu électronique tiers (161) reçu par rapport à un cache de liste de blocage (146) stocké sur le dispositif client ;
- (205) si le contenu électronique tiers (161) contient au moins un élément à bloquer, obtenir, à partir du service d'accessibilité, la position et la taille d'un nœud d'accessibilité correspondant et générer des éléments d'interface utilisateur superposés sur la base de la position et de la taille, superposer le contenu électronique tiers (161) sur une interface utilisateur (144) du dispositif client (140) en affichant ladite superposition sous forme d'une vue vide, translucide, non focalisable ; et
- (206) bloquer une interaction avec le contenu électronique tiers (161) sur l'interface utilisateur (144) du dispositif client (140) en interceptant, via la superposition, des événements d'interaction utilisateur destinés audit contenu et en déclenchant une fenêtre contextuelle d'avertissement.
